# EUROPEAN PATENT SPECIFICATION

(11) **EP 1 251 053 B1**
(45) Date of publication and mention of the grant of the patent: **24.08.2005**
(21) Application number: 01109405.9
(22) Date of filing: 19.04.2001
(51) Int. Cl.: B60T 15/04

(54) **Valve for gradual delaying control of full engagement of the parking brake in hydraulic braking circuits for vehicles**
Ventil für progressiv verzögernde Steuerung des vollen Eingriffs der Feststellbremsanlage in einem hydraulischen Bremssystem eines Kraftfahrzeugs
Soupape pour le contrôle de retard graduel d'engagement complet du frein de stationnement dans les circuits hydrauliques de freinage des véhicules

(43) Date of publication of application: 23.10.2002
(73) Proprietor: Safim S.p.A., 41100 Modena (IT)
(72) Inventor: Mamei, Eronne, 41100 Modena (IT); Mamei, Omer, 41100 Modena (IT)
(74) Representative: Alagem Modiano, Lara S.

(56) References cited:
- US-A- 3 610 700
- US-A- 4 432 585
- US-A- 4 923 254
- US-A- 5 288 140

## Description

The present invention relates to a valve for gradual delaying control of full engagement of the parking brake in hydraulic braking circuits for vehicles.

Vehicles, especially of the industrial type, use parking brakes actuated by large springs which, if the braking system is not powered, lock the vehicle in maximum safety conditions.

During conventional use of the vehicle, such parking brakes are kept disengaged by the pressure of the fluid (usually, but not exclusively, oil) which flows inside the actuation circuit of the braking system and acts on corresponding contrast pistons provided for this purpose.

The engagement of the parking brake can be actuated both by means of a proportional-type valve, and in this case engagement occurs gradually, and by means of a valve of the on-off type, actuated manually or automatically, when the vehicle stops, and in this second case sudden complete halting of the wheels is produced.

This sudden halting causes dangerous situations, if the driver of the vehicle is not wearing the prescribed safety belts, by propelling him suddenly forward.

Another source of danger can be the fact that if the vehicle has, at the front, forks or buckets for carrying bulky and heavy objects or materials and such objects or materials are actually present, sudden halting risks causing the loss of the load, with severe danger for anyone nearby.

Examples of brake control systems are available from douments US-A- 4 923 254 and US-A- 4 432 585.

The aim of the present invention is to eliminate the above-noted drawbacks of the prior art by providing a valve for delayed control of the engagement of the parking brake in hydraulic braking circuits for vehicles which allows to obtain an effective action combined with a reaction of the vehicle having no violent effects.

This aim and this and other objects which will become better apparent hereinafter are achieved by a valve according to the present invention, that has the features set forth in claim 12.

Further characteristics and advantages of the present invention will become better apparent from the description of a preferred embodiment of a valve for gradual delayed control of full engagement of the parking brake in hydraulic braking circuits for vehicles, illustrated only by way of non-limitative example in the accompanying drawings, wherein:
Figure 1 is a schematic sectional view of the gradual delayed control valve according to the invention during the free circulation of the vehicle, with the parking braking action accordingly deactivated;
Figure 2 is the same schematic sectional view as Figure 1, with the valve in the configuration for starting the activation of the parking braking action;
Figure 3 is again the same schematic sectional view of the preceding figures, with the valve in an intermediate step of the delay of the final full activation of the parking braking action;
Figure 4 is a view of the same configuration as in Figure 3 of the valve according to the invention, but using a first valve means in an alternative embodiment;

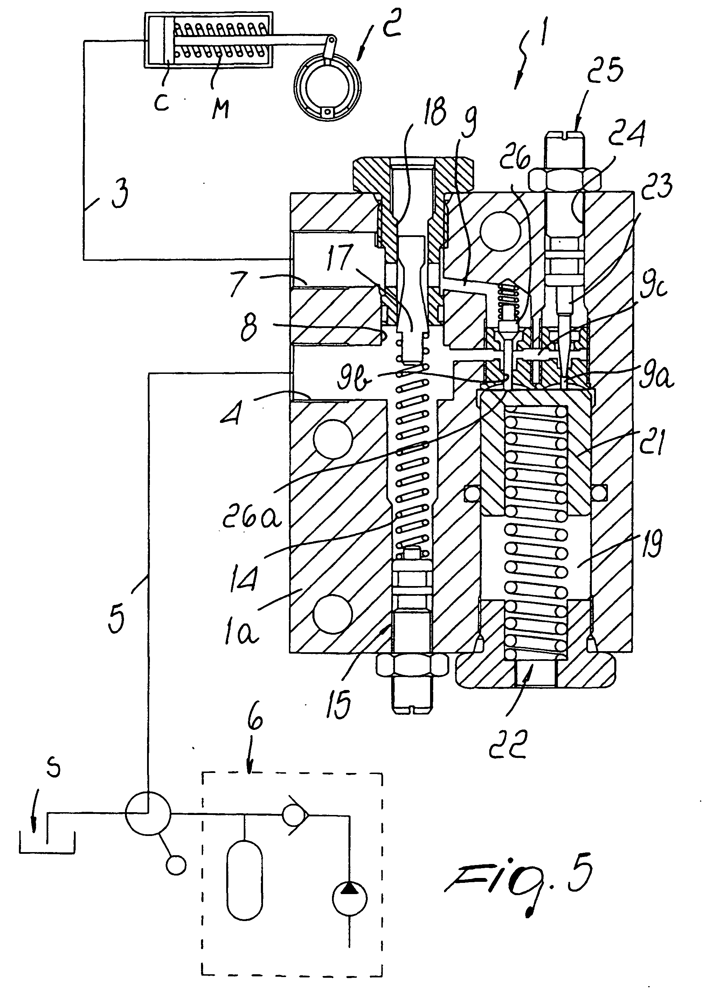

Figure 5 is a view of the valve in the configuration for the final engagement of the parking braking action;
Figure 6 plots, as a function of time, the force F for the actuation of the parking braking action and the force of the pressure P of the fluid which contrasts the action of the force F.

With reference to the figures, 1 designates a valve for gradual delayed control of full engagement of the parking brake 2 in hydraulic braking circuits for vehicles, schematically designated by the line 3.

The valve 1 is substantially constituted by a prism-shaped body 1a which has at least one first coupling port 4 for piped connection 5 to a control and supply valve 6 for activating the parking braking action, and at least one second coupling port 7, for piped connection to the braking circuit 3 of the vehicle.

The first port 4 and the second port 7 are connected one another by way of at least one direct duct 8 and at least one secondary duct 9 being alternately active; said direct duct 8 is controlled by means of a corresponding first valve means 10 and said secondary duct 9 is regulated by way of means valve 13 which are circuitally interposed between the second port 7 and the first port 4.

At least the first valve means 10 is provided with an element for presetting the intervention threshold, being substantially constituted by a helical spring 14 which reacts to compression and is interposed between said first valve means and an opposite retention means 15 having a thread with a fine adjustment pitch.

The second valve means 13 also is provided with second preset contrast elements for the intervention threshold being more simply constituted by a helical compression spring 16 with a preset modulus of elasticity.

In detail, the first valve means 10 is constituted, in the preferred embodiment of the valve 1, by a flow control element 17 having a conical profile and being slidingly inserted in the direct duct 8 in order to control the useful passage section 18 of said duct in contrast with the spring 14.

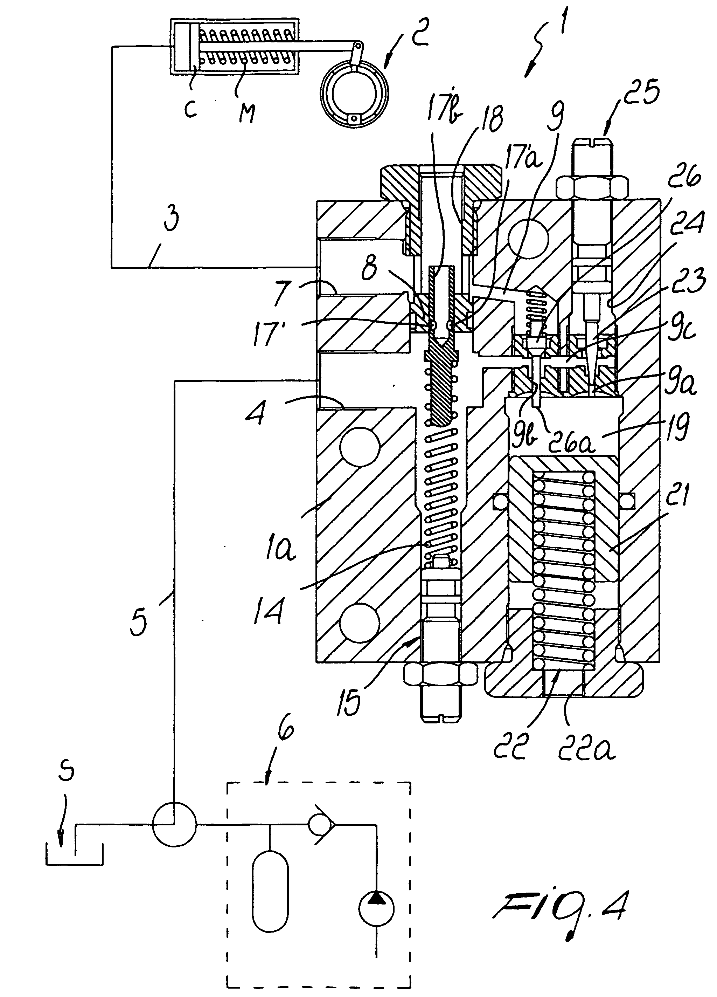

In a possible alternative embodiment of the valve 1, shown in Figure 4, the first valve means 10 is constituted by a flow control element 17' which is substantially stem-like and is slidingly inserted in the direct duct 8 and is perimetrically provided with passages 17'a for controlling the useful passage section 18, again in contrast with the first presetting elements 14.

The flow control element 17' is axially provided with a blind cavity 17'b which extends, from one end which faces the port 7, substantially to half the overall length of the flow control element 17' and is radially connected to the inside of the direct duct 8 by way of said passages 17'a.

The secondary duct 9 is divided into at least one pair of branches 9a and 9b which are connected through an additional common branch 9c and merge in driving means 12 for driving the second valve means 13; said driving means comprise a chamber 19 for accumulating fluid, whose volume can vary by way of sliding means 20; the second valve means 13 and the means 11 for reducing the useful passage section of said branch 9a are arranged respectively on the branches 9b and 9a.

The sliding means 20 are constituted by a piston 21 which is mounted so as to slide hermetically in the chamber 19 and in contrast with elastic means 22 which are provided with a reaction spring and can be preloaded.

The means 11 for reducing the useful passage section of the secondary duct 9a are constituted by a needle-shaped flow control element 23 which can slide in a corresponding seat 24 being coaxial to said first branch 9a and being adapted to enter it more or less deeply, accordingly adjusting its passage section, by way of the action of screw means 25 with a fine adjustment pitch which can be actuated from the outside of said prism-shaped body 1a.

The second valve means 13 is constituted by an additional flow control element 26 which is provided with a segment having a conical profile and is fitted so that it can slide coaxial in said second branch 9b; said flow control element has an end 26a which enters, at the closure stroke limit of said flow control element, the variable-volume chamber 19 in order to make contact with the piston 21 when said piston is in the final portion of its sliding in the chamber and towards it.

It should be noted that the seat for the elastic means 22, designated by the reference numeral 22a, can be connected to the outlet S or directly to the atmosphere, in order to avoid oxidation effects.

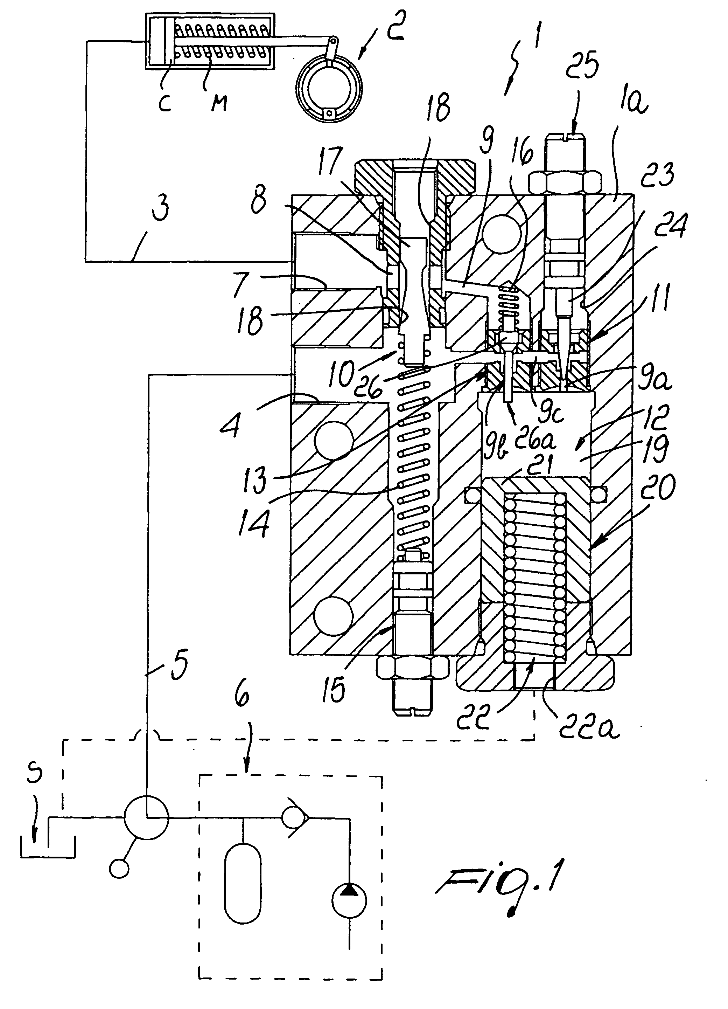

The operation of the invention is as follows: in the configuration shown in Figure 1, the vehicle can circulate freely, since the parking braking action is deactivated.

In this condition, the flow control element 17 closes the useful passage section of the main duct 18 and is kept in this state by the thrust applied thereto by the spring 14, which is suitably preset by acting on the elements 15.

The supply pressure P1 provided by the control valve 6 acts on the fluid inside the chamber 19, by passing through the branches 9a and 9c of the secondary duct 9; the branch 9b also is supplied at the pressure P1, and the flow control element 26 rises in order to allow the passage of pressurized fluid, which reaches the cylinders C, keeping compressed the springs M which act on the brakes of the vehicle, consequently keeping them released.

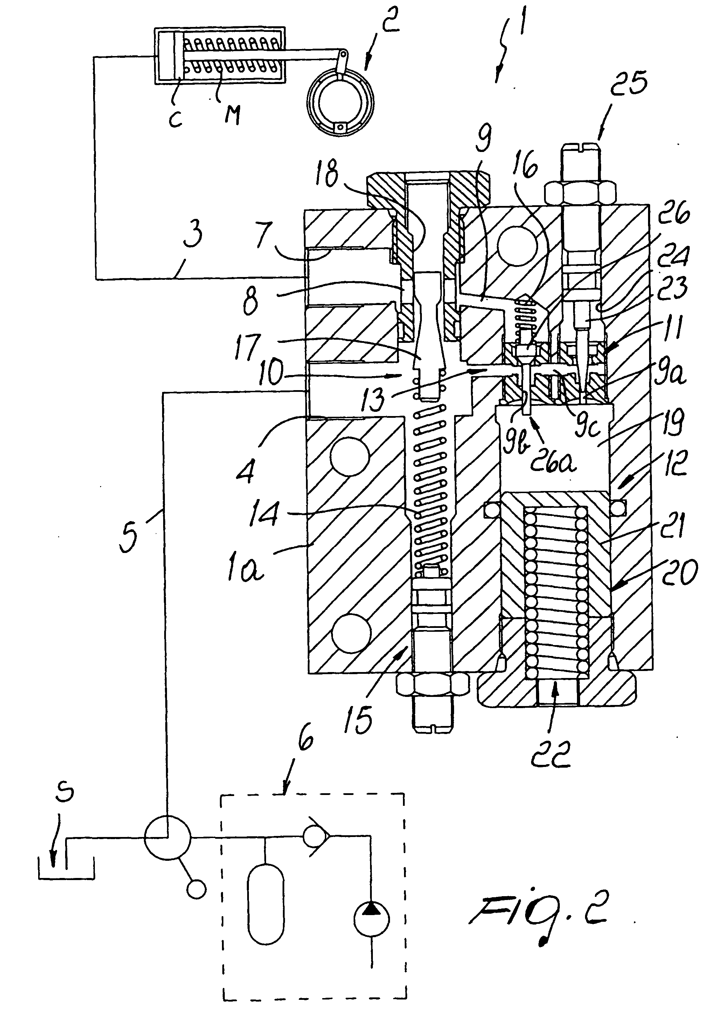

When parking braking is engaged by the driver by acting on the appropriately provided control located proximate to the vehicle driver's seat, the valve 6 (see Figure 2) switches towards the outlet S the direction of the flow of the pressurized fluid P1.

In this condition, the fluid reverses the direction of inflow and the pressure in the circuit 3, designated by P1, begins to decrease.

The pressure acting on the flow control element 17 overcomes the reactive thrust of the spring 14 and opens the port 18: the fluid passes from the circuit 3 through the port 7, then through the main duct 8 and the port 4, reaching the outlet S.

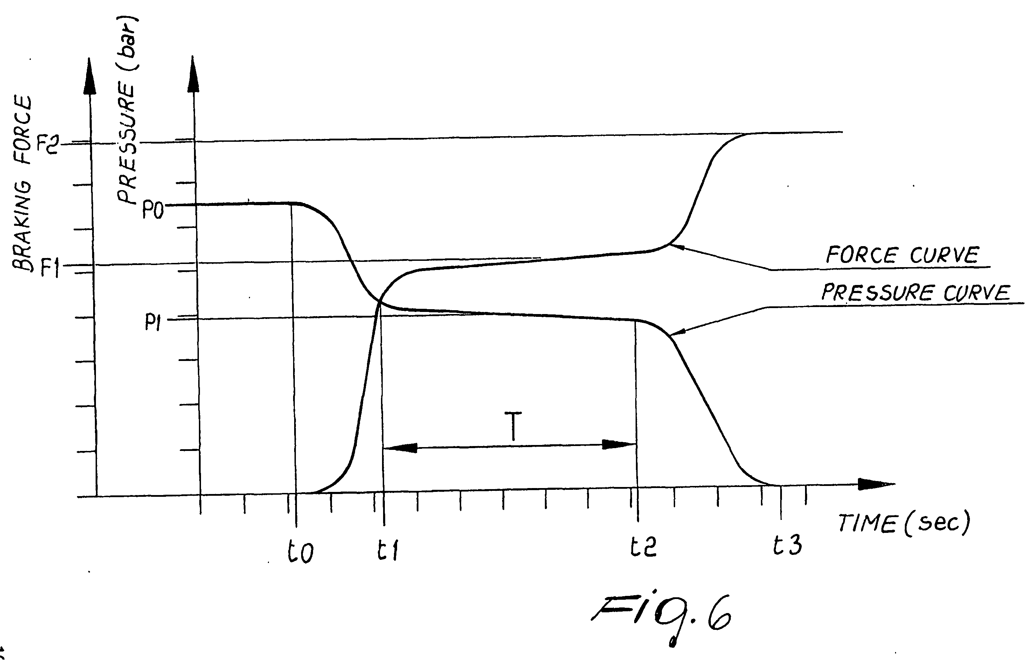

In this condition, the springs M gradually press on the cylinders C and the brakes of the vehicle are activated with a reduced force F1: in the chart of Figure 6, this condition is plotted at time t1.

The pressure decreases inside the chamber 19 as well and the fluid flows towards the outlet S through the branches 9a and the common branch 9c; the branch 9a is regulated by the needle-shaped flow control element 23, and the adjustment of the position of said flow control element increases or decreases the rate of discharge of the fluid towards the outlet S through it; said pressure decrease causes the beginning of the movement of the cylinder 21 in the chamber 19, pushed by the spring means 22.

When the value of the pressure P drops to the preset value of the spring 14, the flow control element 17 closes the useful passage section 18, blocking the outflow of the fluid through said section and towards the outlet S.

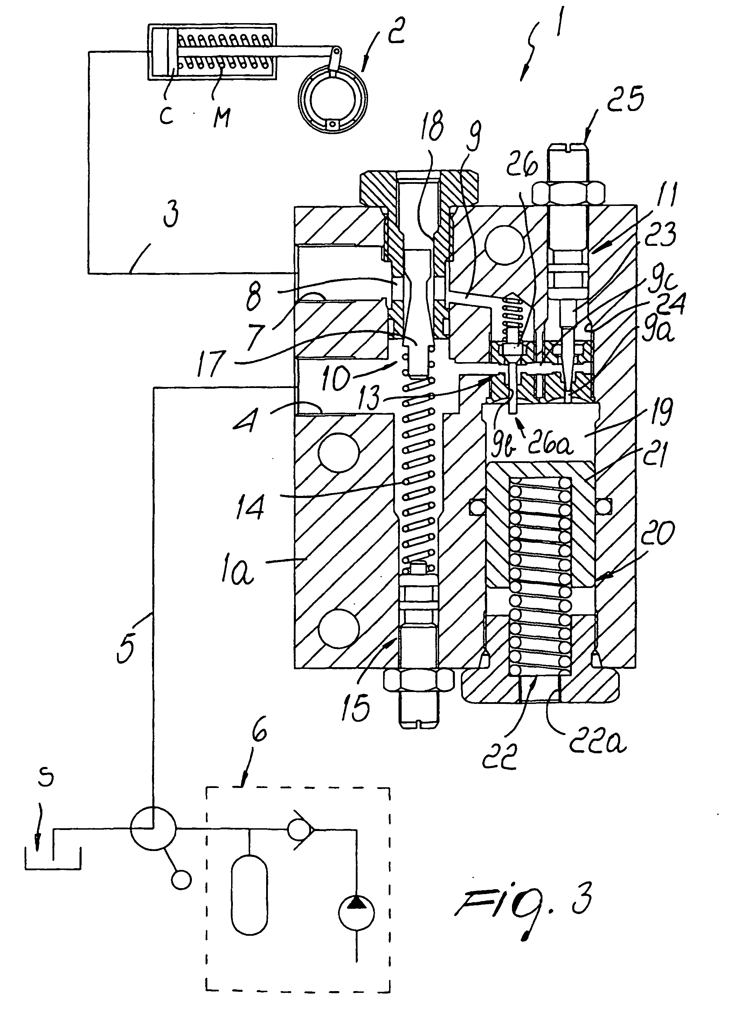

In this condition, shown in Figure 3, the braking force maintains an approximately constant value which is close to the previously mentioned value F1, i.e. it gradually stops the rotation of the wheels of the vehicle without completely halting it: the fluid still continues to gradually flow towards the outlet S, arriving from the chamber 19 by being pushed by the cylinder 21 and passing through the port 4: in the chart of Figure 6, this condition is represented by the interval T between t1 and t2.

When the cylinder 21 reaches abutment against the end 26a of the flow control element 26, it lifts said flow control element, opening the corresponding useful passage section of the secondary duct 9.

This bypasses the main duct 8 and directly connects the outlet S to the cylinders C of the brakes of the vehicle; the fluid contained in them is discharged completely, and the braking force applied by the springs M reaches its maximum value, indicated by F2 in the chart; simultaneously, the value of the pressure P in the circuit 3/5 drops to zero, and the vehicle thus achieves the normal complete parking braking action after the delay interval T.

It is noted that in the embodiment of the flow control element 17' shown in Figure 4, the open condition of the port 18 entails on one side the thrust of the fluid on its transverse cross-section and on the other side the action of the contrast spring 14; in addition to this, there is the action for controlled discharge of the fluid through the radially arranged through passages or ports 17'a, which produces a dynamic equilibrium of said flow control element 17', which moves back and forth, blocking or opening said ports 17'a: this allows to automatically compensate for any losses of pressure caused by seepage of the seals.

In practice it has been found that the described invention achieves the intended aim.

The invention thus conceived is susceptible of numerous modifications and variations, all of which are within the scope of the appended claims.

In practice, the materials used, as well as the shapes and the dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A valve for gradual delaying control of full engagement of the parking brake in hydraulic braking circuits for vehicles constituted by a prism-shaped body (1a) in which at least one first coupling port (4) is provided for piped connection to a control and supply valve (6) for activating the parking braking action, and at least one second coupling port (7), for piped connection to the braking circuit (3) of the vehicle, said first and second ports (4, 7) being connected one another by way of at least one direct duct (8) and at least one secondary duct (9) being alternately active, said at least one direct duct (8) being controlled by way of a corresponding first valve means (10) and said secondary duct (9) being controlled by second valve means (13) and regulated by way of means (11) for reducing the useful section, **characterized in that** it comprises supplying driving means (12), provided at said secondary duct (9) for driving said second valve means (13), which comprise an accumulation chamber with variable volume (19), said secondary duct (9) being connected to said first and second coupling ports (4, 7) so as to bypass said at least one direct duct (8) for the reaching of the maximum parking braking force (F2) after a delay interval (T).

2. The valve according to claim 1, **characterized in that** said first valve means (10) is provided with first elements (14) for presetting the intervention threshold.

3. The valve according to claim 1, **characterized in that** said second valve means (13) is provided with second elements (16) for presetting the intervention threshold.

4. The valve according to claim 1, **characterized in that** said prism-shaped body (1a) is associable in a modular fashion with conventional valve means (6) with which the vehicle is normally equipped.

5. The valve according to claims 1 and 2, **characterized in that** said first valve means (10) is constituted by a flow control element (17) having a conical profile which is slidingly inserted in said direct duct (8) for controlling the useful passage section thereof in contrast with said first elements (14) for presetting the intervention threshold.

6. The valve according to claims 1 and 2, **characterized in that** said first valve means (10) is constituted by a substantially stem-like flow control element (17') which is slidingly inserted in said direct duct (8) in order to control the useful passage section thereof in contrast with said first elements (15) for presetting the intervention threshold, said flow control element (17') being axially provided with a blind cavity (17'b) which extends substantially at half of its length and is radially connected to the inside of said direct duct (8) by way of at least one through port (17'a), said cavity (17'b) providing a pumping action in the stroke for reaching the configuration for closing said through port (17'a).

7. The valve according to claim 1, **characterized in that** said secondary duct (9) is divided into at least one pair of branches (9a, 9b) which are interconnected one another by way of an additional common branch (9c), both branches (9a, 9b) merging in said means (12) for driving said second valve means (13).

8. The valve according to claims 1 and 7, **characterized in that** said fluid accumulation chamber (19) comprises sliding means (20) that are slidable in said chamber (19) so as to vary the volume thereof, said second valve means (13) and said means (11) for reducing the useful passage section being arranged respectively on said branches (9a, 9b).

9. The valve according to claim 8, **characterized in that** said sliding means (20) are constituted by at least one piston (21) which is fitted in said chamber (19) so that it can slide in contrast with preloadable elastic means (22) of the reaction-spring type.

10. The valve according to claims 1 and 7, **characterized in that** said means (11) for reducing the useful section of said secondary duct (9) are constituted by a needle-shaped flow control element (23) which can slide in a corresponding seat (24) which is coaxial to a first one (9a) of said branches and is adapted to enter it more or less deeply, adjusting its passage section by way of the action of fine-pitch screw means (25) which can be actuated from outside said prism-shaped body (1a).

11. The valve according to claims 1 and 7, **characterized in that** said means (11) for reducing the useful section of said secondary duct (9) are constituted by a transverse diaphragm which is inserted in a first one (9a) of said branches and is crossed by a port having a calibrated size.

12. The valve according to claim 9, **characterized in that** said second valve means (13) is constituted by an additional flow control element (26) having a conical profile, which is fitted so as to slide coaxial in a second one (9b) of said branches and protrudes, at the end of its closure stroke, so that one end (26a) thereof lies inside said variable-volume chamber (19) for abutment contact with said piston (21) adapted to open the useful passage section of the secondary duct (9).

13. The valve according to claims 2 and 3, **characterized in that** said first (14) and second (16) presetting elements are constituted by corresponding helical springs which react to compression and are interposed between the respective first (10) and second (13) valve means and mutually opposite retention means (15) of the type with a fine-pitch thread.

## Patentansprüche

1. Ventil für progressiv verzögernde Steuerung des vollen Eingriffs der Feststelibremsanlage in einem hydraulischen Bremssystem für Fahrzeuge gebildet durch einen prismenförmigen Körper (1a), bei dem mindestens eine erste Anschlussöffnung (4) für Leitungsverbindung mit einem Steuer- und Zuleitungsventil (6) zum Aktivieren der Feststellbremswirkung vorgesehen ist und mindestens eine zweite Anschlussöffnung (7) für Leitungsverbindung mit dem Bremssystem (3) des Fahrzeugs, wobei die ersten und zweiten Öffnungen (4, 7) miteinander durch mindestens einen direkten Kanal (8) verbunden sind und mindestens ein zweiter Kanal (9) abwechselnd aktiv ist, wobei der mindestens eine direkte Kanal (8) durch ein entsprechendes erstes Ventilmittel (10) gesteuert ist und der zweite Kanal (9) durch zweite Ventilmittel (13) gesteuert ist und durch Mittel (11) zum Reduzieren des Wirkquerschnitts reguliert wird, **dadurch gekennzeichnet, dass** es Zuführen von Antriebsmittein (12) umfasst, die am zweiten Kanal (9) vorgesehen sind zum Antreiben der zweiten Ventilmittel (13), die eine Aufnahmekammer mit variablem Volumen (19) umfassen, wobei der zweite Kanal (9) mit den ersten und zweiten Anschlussöffnungen (4, 7) so verbunden ist, dass der mindestens eine direkte Kanal (8) umgangen wird, um die maximale Feststellbremskraft (F2) nach einem Verzögerungsintervall (T) zu erreichen.

2. Ventil nach Anspruch 1, **dadurch gekennzeichnet, dass** das erste Ventilmittel (10) mit ersten Elementen (14) zum Voreinstellen der Interventionsschwelle versehen ist.

3. Ventil nach Anspruch 1, **dadurch gekennzeichnet, dass** das zweite Ventilmittel (13) mit zweiten Elementen (16) zum Voreinstellen der Interventionsschwelle versehen ist.

4. Ventil nach Anspruch 1, **dadurch gekennzeichnet, dass** der prismenförmige Körper (1a) modular herkömmlichen Ventilmitteln (6) zugeordnet sein kann, mit denen das Fahrzeug normalerweise ausgerüstet ist.

5. Ventil nach Anspruch 1 und 2, **dadurch gekennzeichnet, dass** das erste Ventilmittel (10) durch ein Durchflussregelelement (17) mit einem konischen Profil gebildet ist, das verschiebbar in dem direkten Kanal (8) eingesetzt ist, um im Gegensatz zu den ersten Elementen (14) zum Voreinstellen der Interventionsschwelle, den Durchtrittswirkquerschnitt zu steuern.

6. Ventil nach Anspruch 1 und 2, **dadurch gekennzeichnet, dass** das erste Ventilmittel (10) durch ein im Wesentlichen stabförmiges Durchflussregelelement (17') gebildet ist, das verschiebbar im direkten Kanal (8) eingesetzt ist, um im Gegensatz zu den ersten Elementen (15) zum Voreinstellen der Interventionsschwelle, den Durchtrittswirkquerschnitt zu steuern, wobei das Durchflussregelelement (17') axial mit einem Blindhohlraum (17'b) versehen ist, der sich im Wesentlichen über die halbe Länge erstreckt und radial mit der Innenseite des direkten Kanals (8) durch mindestens eine durchgehende Öffnung (17'a) verbunden ist, wobei der Hohlraum (17'b) eine Pumpwirkung beim Hub zum Erreichen der Konfiguration zum Schließen der durchgehenden Öffnung (17'a) ausbildet.

7. Ventil nach Anspruch 1, **dadurch gekennzeichnet, dass** der zweite Kanal (9) in mindestens ein Paar Verzweigungen (9a, 9b) aufgeteilt ist, die miteinander durch eine zusätzliche gemeinsame Verzweigung (9c) verbunden sind, wobei beide Verzweigungen (9a, 9b) in das Mittel (12) zusammenlaufen, um das zweite Ventilmittel (13) anzutreiben.

8. Ventil nach Anspruch 1 und 7, **dadurch gekennzeichnet, dass** die Fluidaufnahmekammer (19) Schiebemittel (20) umfasst, die in der Kammer (19) verschiebbar sind, um ihr Volumen zu verändern, wobei das zweite Ventilmittel (13) und das Mittel (11) zum Reduzieren des Durchtrittswirkquerschnitts jeweils auf den Verzweigungen (9a, 9b) angeordnet sind.

9. Ventil nach Anspruch 8, **dadurch gekennzeichnet, dass** die Schiebemittel (20) aus mindestens einem Kolben (21) gebildet sind, der in die Kammer (19) eingepasst ist, so dass er sich im Gegensatz zu vorspannbaren elastischen Mitteln (22) vom Typ einer Rückschlagfeder verschieben kann.

10. Ventil nach Anspruch 1 und 7, **dadurch gekennzeichnet, dass** die Mittel (11) zum Reduzieren des Wirkquerschnitts des zweiten Kanals (9) durch ein nadelförmiges Durchflussregelelement (23) gebildet ist, das in einem entsprechenden Sitz (24) verschiebbar ist, der zu einer ersten (9a) der Verzweigungen koaxial ist und geeignet ist, mehr oder weniger tief darin einzutreten, wobei der Durchtrittsquerschnitt durch die Wirkung von feingängigen Schraubenmitteln (25) eingestellt wird, die von außerhalb des prismenförmigen Körpers (1 a) betätigt werden können.

11. Ventil nach Anspruch 1 und 7, **dadurch gekennzeichnet, dass** die Mittel (11) zum Reduzieren des Wirkquerschnitts des zweiten Kanals (9) durch eine querverlaufende Membran gebildet ist, die in einer ersten (9a) der Verzweigungen eingesetzt ist und von einer Öffnung durchkreuzt wird, die eine kalibrierte Größe aufweist.

12. Ventil nach Anspruch 9, **dadurch gekennzeichnet, dass** das zweite Ventilmittel (13) durch ein zusätzliches Durchflussregelelement (26) gebildet ist, das ein konisches Profil aufweist, das so eingepasst ist, dass es koaxial in einer zweiten (9b) der Verzweigungen verschiebbar ist und am Ende seines Schließhubs so hervorsteht, dass ein Ende (26a) davon zum Anschlagkontakt mit dem Kolben (21) in der Kammer (19) mit variablem Volumen liegt, der geeignet ist, den Durchtrittswirkquerschnitt des zweiten Kanals (9) zu öffnen.

13. Ventil nach Anspruch 2 und 3, **dadurch gekennzeichnet, dass** das erste (14) und zweite (16) Voreinstellelement durch entsprechende Spiralfedern gebildet sind, die auf Kompression ansprechen und zwischen die entsprechenden ersten (10) und zweiten (13) Ventilmittel und einander gegenüberstehende Haltemittel (15) des Typs mit feingängigem Gewinde eingesetzt sind.

## Revendications

1. Soupape pour retarder progressivement l'obtention du serrage complet du frein de parking dans des circuits hydrauliques de freinage pour véhicules, constituée par un corps de forme prismatique (1a) dans lequel au moins un orifice de couplage (4) est prévu pour un accouplement par tuyau avec une soupape de commande et d'alimentation (6) pour activer le frein de parking, et au moins un second orifice de couplage (7), pour un accouplement par tuyau avec le circuit de freinage (3) du véhicule, lesdits premier et second orifices (4, 7) étant reliés l'un à l'autre par l'intermédiaire d'au moins un conduit direct (8) et au moins un conduit secondaire (9) actifs en alternance, ledit au moins un conduit direct (8) étant commandé par l'intermédiaire d'un premier moyen formant soupape correspondant (10) et ledit conduit secondaire (9) étant commandé par un second moyen formant soupape (13) et régulé par l'intermédiaire d'un moyen (11) pour réduire la section utile, **caractérisée en ce qu'**elle comprend un moyen de commande d'alimentation (12), présent dans ledit conduit secondaire (9) pour actionner ledit second moyen formant soupape (13), qui comporte une chambre d'accumulation à volume variable (19), ledit conduit secondaire (9) étant relié auxdits premier et second orifices de couplage (4, 7) afin de contourner ledit au moins un conduit direct (8) pour atteindre après un temps d'attente (T) la force maximale (F2) du frein de parking.

2. Soupape selon la revendication 1, **caractérisée en ce que** ledit premier moyen formant soupape (10) est pourvu de premiers éléments (14) pour prérégler le seuil d'intervention.

3. Soupape selon la revendication 1, **caractérisée en ce que** ledit second moyen formant soupape (13) est pourvu de seconds éléments (16) pour prérégler le seuil d'intervention.

4. Soupape selon la revendication 1, **caractérisée en ce que** ledit corps (1a) de forme prismatique peut être associé de manière modulaire à un moyen classique formant soupape (6) dont est normalement équipé le véhicule.

5. Soupape selon les revendications 1 et 2, **caractérisée en ce que** ledit premier moyen formant soupape (10) est constitué par un élément de commande d'écoulement (17) à profil conique qui est inséré d'une manière coulissante dans ledit conduit direct (8) pour commander la section de passage utile de celui-ci, à l'encontre desdits premiers éléments (14) servant à prérégler le seuil d'intervention.

6. Soupape selon les revendications 1 et 2, **caractérisée en ce que** ledit premier moyen formant soupape (10) est constitué par un élément (17') de commande d'écoulement sensiblement en forme de tige qui est inséré de manière coulissante dans ledit conduit direct (8) afin de commander la section de passage utile de celui-ci à l'encontre desdits premiers éléments (15) servant à prérégler le seuil d'intervention, ledit élément (17') de commande d'écoulement étant pourvu axialement d'une cavité borgne (17'b) qui s'étend sensiblement sur la moitié de sa longueur et est reliée radialement à l'intérieur dudit conduit direct (8) par l'intermédiaire d'au moins un orifice traversant (17'a), ladite cavité (17'b) réalisant une action de pompage lors de la course servant à atteindre la configuration pour la fermeture dudit orifice traversant (17'a).

7. Soupape selon la revendication 1, **caractérisée en ce que** ledit conduit secondaire (9) est divisé en au moins une paire de branches (9a, 9b) qui sont reliées l'une à l'autre par l'intermédiaire d'une branche supplémentaire commune (9c), les deux branches (9a, 9b) se fondant dans ledit moyen (12) pour actionner ledit second moyen formant soupape (13).

8. Soupape selon les revendications 1 et 7, **caractérisée en ce que** ladite chambre (19) d'accumulation de fluide comporte des moyens coulissants (20) qui peuvent coulisser dans ladite chambre (19) afin de modifier le volume de celle-ci, lesdits seconds moyens formant soupape (13) et lesdits moyens (11) pour réduire la section de passage utile étant respectivement disposés sur lesdites branches (9a, 9b).

9. Soupape selon la revendication 8, **caractérisée en ce que** lesdits moyens coulissants (20) sont constitués par au moins un piston (21) qui est logé dans ladite chambre (19) de manière à pouvoir coulisser à l'encontre de moyens élastiques (22) pouvant être précontraints, du type à ressort de réaction.

10. Soupape selon les revendications 1 et 7, **caractérisée en ce que** lesdits moyens (11) pour réduire la section utile dudit conduit secondaire (9) sont constitués par un élément de commande d'écoulement (23) en forme de pointeau qui peut coulisser dans un siège correspondant (24) coaxial à une première (9a) desdites branches et est conçu pour entrer plus ou moins profondément dans celui-ci, en ajustant sa section de passage sous l'action de moyens filetés à petit pas (25) qui peuvent être actionnés de l'extérieur dudit corps (1a) de forme prismatique.

11. Soupape selon les revendications 1 et 7, **caractérisée en ce que** lesdits moyens (11) pour réduire la section utile dudit conduit secondaire (9) sont constitués par une membrane transversale qui est insérée dans une première zone (9a) des branches et est croisée par un orifice ayant des dimensions calibrées.

12. Soupape selon la revendication 9, **caractérisée en ce que** ledit second moyen formant soupape (13) est constitué par un élément de commande d'écoulement supplémentaire (26) à profil conique, qui est monté de manière à coulisser coaxialement dans une seconde (9b) desdites branches et qui dépasse, à la fin de sa course de fermeture, de façon qu'une extrémité (26a) de celui-ci se trouve à l'intérieur de ladite chambre (19) à volume variable pour buter contre ledit piston (21) permettant l'ouverture de la section de passage utile du conduit secondaire (9).

13. Soupape selon les revendications 2 et 3, **caractérisée en ce que** lesdits premier (14) et deuxième (16) éléments de préréglage sont constitués par des ressorts hélicoïdaux correspondants qui réagissent à la compression et sont intercalés entre les premier (10) et deuxième (13) moyens respectifs formant soupape et des moyens de retenue (15) mutuellement opposés, du type à filetage à petit pas.
